# EUROPEAN PATENT SPECIFICATION

(11) **EP 3 413 756 B1**
(45) Date of publication and mention of the grant of the patent: **22.05.2019**
(21) Application number: 17704722.2
(22) Date of filing: 09.02.2017
(51) Int. Cl.: A47C 7/38

(54) **A DEVICE FOR A CHILD SEAT**
VORRICHTUNG FÜR EINEN KINDERSITZ
DISPOSITIF POUR SIÈGE ENFANT

(30) Priority: 12.02.2016 NO 20160248
(43) Date of publication of application: 19.12.2018
(73) Proprietor: HTS Hans Torgersen & Sønn AS, 3535 Krøderen (NO)
(72) Inventor: MOURIK, Okke van, 3514 BS Utrecht (NL); SMITS, Joyce, 1052 KC Amsterdam (NL)
(74) Representative: Onsagers AS
(86) International application number: PCT/EP2017/052835
(87) International publication number: WO 2017/137485

(56) References cited:
- FR-A- 1 471 309
- FR-A1- 2 613 921
- US-A- 5 778 887
- US-A1- 2005 264 055

## Description

The present invention relates to the field of child vehicle seats, strollers, booster seats and the like, and more particularly to a child sleeping and support aid for the same that reduces or prevents the child's head from tipping or rolling when the child falls asleep in an upright seated position.

Restful sleep is important for human beings, and even more so for young children and babies. The motions experienced while driving in a vehicle frequently cause drowsiness and the desire to fall asleep, and this is especially so with babies. Some parents actually deliberately use this phenomenon to encourage their children to fall asleep, by placing their child in a car seat and driving around until the child falls asleep.

Indeed, when infants or children are riding in a vehicle car seat, they often spend a lot of the time sleeping. During sleep, however, the muscles in the neck and back of the human body which normally support the head do not function. This is mere so in infants or children as their neck and back muscles are not as strong as those of an adult. The result is that, consequently, when children are asleep in a car seat, their head will fall forward or "roll" to the left or right, placing strain on the child's neck and spine and causing discomfort that reduces the quality of sleep that the child enjoys. While driving in and around city streets, the forces associated with vehicle acceleration, braking, and sharp turns, respectively, further magnify the harmful effects on the neck and spine caused by the child's head not being supported.

The vehicle seat belts can be used to secure infant or toddler car seats as well as children sitting on booster seats. Although these standards meet health and safety criteria, the seat belts only support the upper body of small passengers, thus negating the head and neck regions which potentially could result in severe head and neck injuries. Car seats and booster seats are a requirement for health and safety reasons. However at present, neither car seats nor booster seats provide any head and neck support to help reduce and ultimately prevent possible head and neck injuries such as whiplash and the like. Indeed, head and neck support mechanisms are critical and essential for comfort and the prevention of head and neck injuries.

Head supports for adults and children are known in the art. However, the prior art lacks the salient features and advantages of the present invention as described herein.

Moreover, many of the prior art patents disclose apparatus specifically designed for adult seats. Others require several parts, involve intricate installation, are incapable of being readily adjusted to accommodate for various head size, and are bulky in both size and weight.

US 2.267.103 relates to a head support for various types of vehicles employed for the transportation of persons. The head support is especially adaptable for use by persons who are traveling for long distances and desire to relax and rest.

US 2.582.571 relates to a headrest comprising a pair of cushions which are arranged in spaced-apart relation with one another for the reception of a person's head therebetween. The cushions are mounted on a band that is designed to encircle the back of a seat in a bus, train, or the like. The band may be adjusted with respect to the back so that the cushions will embrace opposite sides of the person's head and cover the latter's ears.

US 6.648.416 B2 relates to a headrest where the headrest includes a support member having a center portion and an end portion which is integrally formed and which extends angularly from the center portion. A wing member is coupled to the end portion by a hinge mechanism that has sufficient friction to maintain any of a plurality of positions under a load of a human head leaning against said wing member, yet yields when a greater load is applied.

US 8.141.187 B2 relates to a supportive head and neck pillow with a supportive bone structure inside the pillow. The supportive head and neck pillow is used for head and neck support and comfort while sleeping sitting up during transportation. The supportive head and neck pillow can also be used for head and neck support for people who have neck injuries, or to prevent neck injures during transportation. The main components are made up of two things, a pillow with a bone structure support inside the pillow and a clip/strap system.

FR 2.613.921 A1 relates to a travel cushion/pillow, where the travel cushion/pillow consists of two flexible sheets which are cut out and joined together by welding or some other means giving the same result, and which trap between them a filling element such as air, foam or other substances having the same filling effect, and comprises a central recess improving the comfort in the region of contact of the ear of the user and one or more eyelets intended to receive an accessory for fastening the travel cushion/pillow to the side window or to some other part of the transport means. A protective cover surrounds the travel cushion/pillow and provides the user with comfort of contact with fabric.

US 5.471.690 A1 relates to a travel pillow, where the travel pillow is provided in the form of a torus which is inflated and which has an integral bottom backing member adapted to coat with the seat back of a chair in a plane, train, bus or automobile in which sleep is promoted regardless of movement of the individual's head during sleep periods because the pillow permits both rotation of the head within the torus during sleep and also movement of the pillow laterally and vertically as it slips against the seat back during natural sleep movements.

US 2005/264055 A1 relates to a children's pillow adapted for use with a children's car seat comprising: (a) a central area adapted to receive at least a rearward portion of a child's head; (b) a first lateral wing extending from the central area; (c) a second lateral wing extending from the central area; (d) a neck support region; and (e) a retainer adapted to mount the children's pillow to the children's car seat, where the neck support region extends between the first lateral wing and the second lateral wing.

WO 03/068556 A1 relates to a lateral headrest for a seat, particularly in a means of transport, comprising a headrest body for support of the head of a person seated in the seat and means for fixing the headrest body to the seat backrest, particularly in a detachable manner. The above is characterised in comprising means for avoiding a displacement of the head of the passenger tending to come away from the backrest of the seat and the fixing means are embodied such as to mount the body of the headrest to be displaced in translation in front of the part of the backrest against which the back of the person was resting, facing or to the side thereof, whereby the body of the headrest may be adjusted in height over at least a part of the height of said part of the backrest.

US 2013/300176 A1 relates to a head restraint system, where the head restraint system includes a first support arm formed of a flexible material. The head restraint further includes a first clamp arm coupleable to a child seat. A first joint for coupling the first support arm to the first clamp arm is configured to allow actuation of the first support arm between a first position extending horizontally across a portion of a child's forehead and a second position disposed away from the child's forehead.

Parents will have noted (to their dismay) that while their little angels are strapped into their car seats they tend to fall asleep and their heads tend to fall forwards or lean sideways in unnatural and uncomfortable positions. In such positions, spontaneous head movements can occur resulting in the head being thrown around in an unsupported manner, which ultimately may result in serious injuries that can affect the soft tissues of the cervical spine (e.g. ligaments and intervertebral discs) and muscles.

Due to the relatively delicate and weak nature of the neck of infants and children it is preferable that the head and neck support mechanism specifically supports, prevents and protects the infant's or child's head when subjected to spontaneous movements.

Thus, there is a pressing need for a means for preventing an infant's or a child's head from tossing to and fro when the infant or child fall asleep. Such a means must be simple to use, incapable of being sabotaged by the infant or child, once engaged, and relatively inexpensive to achieve mass market acceptance. There has been a variety of devices proposed in relevant art in an attempt to solve these problems. However, there are various drawbacks associated with the prior art.

It is an object of the present invention to minimize and possibly alleviate one or more of the disadvantages of the prior art, or to provide a useful alternative.

These objects are achieved with a sleeping aid according to the following independent claim, with additional embodiments set forth in the dependent claims. According to the present invention it is provided a sleeping aid for an infant seat, where the sleeping aid comprises a pad or a pillow that is divided into a thicker first portion and a thinner second portion, the thinner second portion being completely encircled or enclosed by the thicker first portion, and further being arranged offset center of the sleeping aid, the thinner second portion forming a support section for an infant's or a child's head when the infant or child is seated in the infant seat and using the sleeping aid, also ensuring that the infant's or child's head is kept in an appropriate position. A strap and/or elastic band is pivotally attached to the pad or pillow through a pivot connection, thereby allowing the sleeping aid to be connected to the infant seat.

The pad or pillow may comprise a front layer and a back layer, where a layer of a soft foam material is arranged between the front layer and back layer. In order to form a closed pad or pillow, the front layer, back layer and the layer of a soft foam material are connected around their outer peripheries in appropriate ways, for instance by sewing a band or the like around the edges of said layers. Said layers may also be connected to each other by gluing, heating or the like.

Said layers, i.e. the front layer, back layer and layer of a soft foam material, are also connected to each other on an inside of their outer peripheries in order to divide the pad or pillow into the first and second portion. The connection between said layers, on the inside of their outer peripheries, which can be made by sewing, gluing, heating or the like, can be done in such a way that a closed area is created inside the outer peripheries of the pad or pillow, where this closed area will form the second portion in the sleeping aid, said second portion forming a support section for the infant's or child's head and ensuring that the infant's or child's head is kept in an appropriate position during use of the sleeping aid. The arrangement of the second portion is such that the second portion will be completely encircled or enclosed by the first portion of the sleeping aid.

When said layers, i.e. the front layer, back layer and layer of a soft foam material are connected to each other to form the closed area, i.e. the second portion in the sleeping aid, then the sewing, gluing or heating will compress said layers together in this connection area, whereby the sleeping aid will have a varying thickness over its length when viewed in cross section from a side view. This will also result in that the second portion of the sleeping aid will be thinner than the rest of the sleeping aid, i.e. the first portion of the sleeping aid.

The thinner second portion will therefore form a depression or a "bowl" in the sleeping aid according to the present invention, where this depression or "bowl" is designed to receive and support one side of the child's head.

The thinner second portion may have a circular or substantially circular form, but it could also be envisaged that the thinner second portion may have other forms that will support and assure that the child's head is kept in position when the child is using the sleeping aid.

The thinner second portion is made to be located offset a center of the sleeping aid, where the thinner second portion can be located offset the center in a longitudinal and/or transverse direction of the sleeping aid.

The fastening assembly which is attached to the pad or pillow of the sleeping aid comprises a strap and/or an elastic band that is/are used to connect the sleeping aid to the infant seat. The strap and/or the elastic band may then, at one end be provided with a loop, and at an opposite end be connected to, for instance, to the back layer of the sleeping aid.

The connection between the strap and/or elastic band and the sleeping aid is a pivot connection, thereby allowing the pad or pillow to rotate relative the strap or elastic band in order to allow the child to adjust the sleeping aid for optimal comfort.

However, a skilled person will know that the strap and the elastic band may be connected to each other through one of their ends, while the opposite end of the strap then will be connected to the sleeping aid and the opposite end of the elastic band then will be provided with a loop.

The strap or the elastic band may be connected to the back layer of the pad or pillow, in the area within the second portion. Preferably, this area may be located offset center of the second portion.

It could also be envisaged that one or more additional layers can be arranged between the front layer and back layer, where such additional layer or layers can be a layer of a moisture absorbent material, a layer of a heat insulating material, stiffer or softer layer(s), layer(s) covering only a part of an area of the front layer or back layer etc.

The sleeping aid, when seen from the side, may have, a crescent formed shape, but other shapes could also be envisaged, as long as they provide sufficient support and comfort for the infant or child.

When seen from above, the sleeping aid may have a form of a tapering trapeze with rounded corners. However, the sleeping aid may also have other forms, such as a circular, polygonal form or the like.

The front layer and back layer may be manufactured from a skin friendly fabric or material. A person skilled in the art will know which material and/or materials can be used, whereby this is not described further herein.

Ends of the elastic band may be sewn together to form a closed loop, but it could also be envisaged that the ends of the elastic band could be provided with Velcro, push buttons or the like.

The front layer, back layer and the layer of soft foam material may be connected to each other by sewing, but it could also be envisaged that the said layers could be connected to each other by using an adhesive, by welding, heat or the like.

Other advantages and characteristics of the present invention will be apparent from the following detailed description, the appended drawings and the following claims, wherein
Figures 1A-1D show a sleeping aid for an infant seat according to the present invention, where figure 1A is a front view of the sleeping aid, from above, figure 1B is a back view of the sleeping aid, from above, figure 1C is perspective view of the sleeping aid and figure ID is a cross section through the sleeping aid shown in figure 1A, along a line A-A indicated in figure 1A,
Figures 2A-2C show how the sleeping aid according to the present invention can be installed in an infant seat,
Figures 3A-3C show how the sleeping aid according to the present invention can be adjusted to a head of the child sitting in an infant seat,
Figures 4A-4C show how the sleeping aid according to the present invention can be brought from a position in use to a position in non-use, and
Figure 5 shows a child in an infant seat, using the sleeping aid according to the present invention.

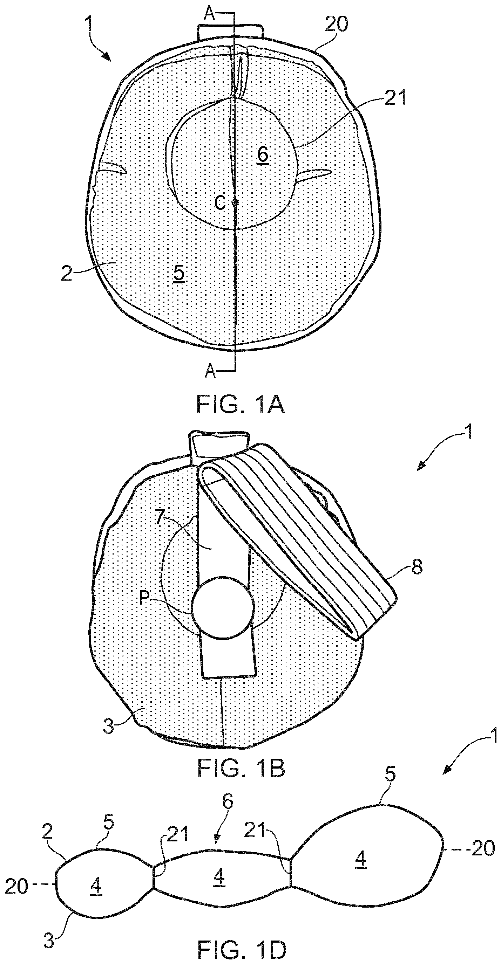

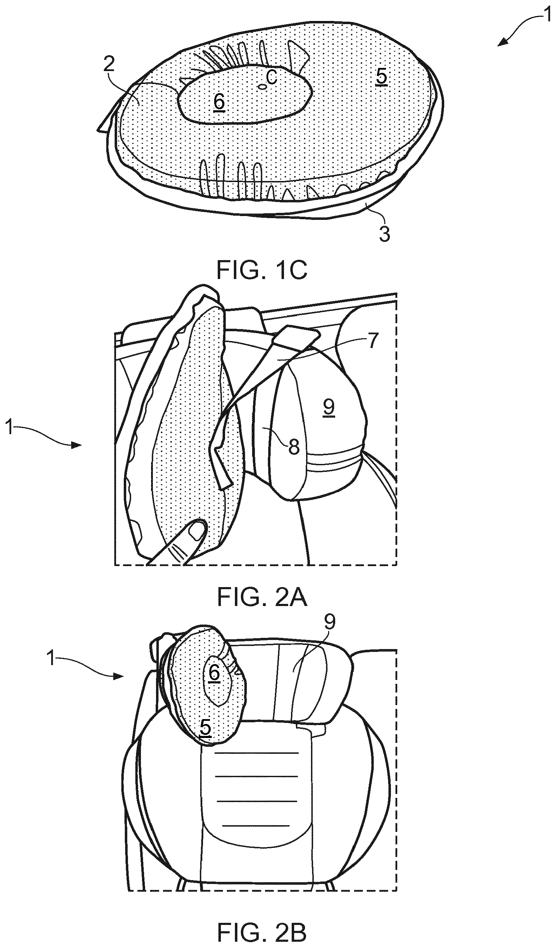

As shown in the embodiment of figure 1, a sleeping aid 1 according to the present invention comprises a front layer 2 and a back layer 3, where a layer 4 of a soft foam material is arranged between the front layer 2 and the back layer 3.

The front layer 2, the back layer 3 and the layer 4 of soft foam material are sewn 20 together around their outer peripheries to form a closed pad or cushion.

Furthermore, said layers 2, 3, 4 are also sewn together on an inside of their outer peripheries, thereby forming and dividing the sleeping aid 1 into a first portion 5 and a second portion 6, where the first portion 5 will completely encircle or enclose the second portion 6.

The sewing will provide a first, closed seam 20 around the peripheries of the sleeping aid 1, and a second, closed seam 21 inside the peripheries of the sleeping aid 1, when seen from above.

Regarding the second portion 6, the front layer, 2, the back layer 3 and the layer 4 of soft foam material are sewn together in such a way that the second portion 6 is made offset a center C in the sleeping aid 1. The second position 6 may, as a skilled person will know, be made offset the center C in a longitudinal direction or a transverse direction of the sleeping aid 1.

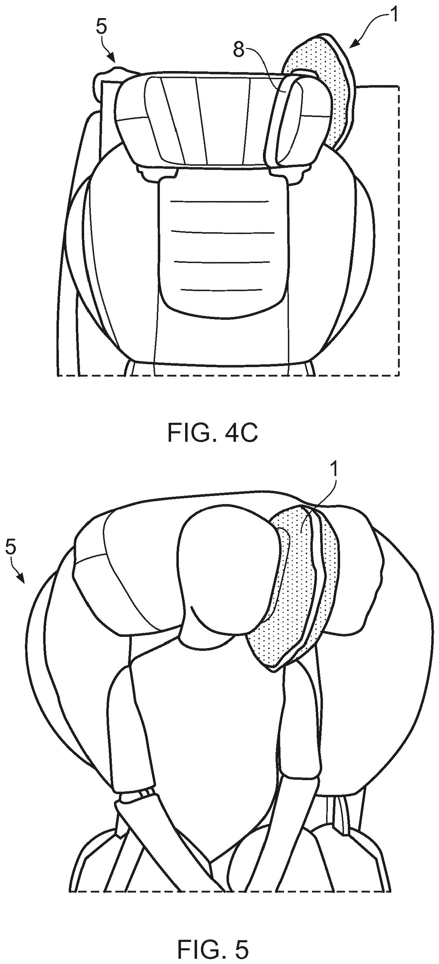

The second portion 6 is formed to receive and support a head of a child, see also figure 5, when the child is seated in an infant seat S and using the sleeping aid 1. A part of the first portion 5 will then fill a space between a shoulder and a jaw of the child, while another part of the first portion 5 will fill a space between the head of the child and a headrest of the infant seat S.

Figure 1B shows a backside of the sleeping aid 1, where it can be seen that a strap 7 towards one of its ends is pivotally connected to the back layer 3 through a pivot point P, such that the sleeping aid 1 and the strap 7 can be moved or rotated relative each other. The strap 7 is, through its opposite end, connected to an elastic band 8, where the elastic band 8 is connected to form a closed circuit or a loop in the elastic band 8.

The strap 7 is connected to the back layer 3 through an appropriate pivot connection, such as a push button or the like, which a person skilled in the art will know, whereby this is not described further herein.

When seen in a cross section from a side, the sleeping aid 1 will have a crescent shape. When seen from above, it will have a form of a tapering trapeze with rounded edges.

Figure ID shows a cross section through the sleeping aid 1 shown in figure 1A, along a line A-A indicated in figure 1A. The sewing of the front layer 2, back layer 3 and the layer 4 of the soft foam material will compress said layers 2, 3, 4 together in the area of sewing, whereby the second, closed seem 21 will result in that the second portion 6 of the sleeping aid 1 will have a reduced thickness than the rest of the sleeping aid 1, i.e. the first portion 5 of the sleeping aid 1.

The front layer 2, the back layer 3 and the layer 4 of the soft foam material are, around their outer peripheries and on an inside of their outer peripheries, sewn 20, 21 to each other through a through-going seam. However, the connection between said layers 2, 3, 4 can also be obtained by welding or gluing.

The second portion 6 will therefore form a depression or a "bowl" in the sleeping aid 1. This depression or "bowl" is designed to receive and support one side of the head of the child, thereby supporting a cheek, an ear and a part of the head.

When the front layer 2, the back layer 3 and the layer 4 of the soft foam material are connected to each other as described above, the sleeping aid 1 will have a varying thickness over its length and/or width.

Figures 2A-2C show how the sleeping aid 1 according to the present invention can be installed on a forwardly protruding part of a headrest 9 of the infant seat S.

When the sleeping aid 1 is to be installed in the infant seat S, the elastic band 8, provided with a closed circuit or loop, is stretched and guided in over the forwardly protruding part of the headrest 9. Through the strap 7 the sleeping aid 1 is held within or inside the area of the head rest 9.

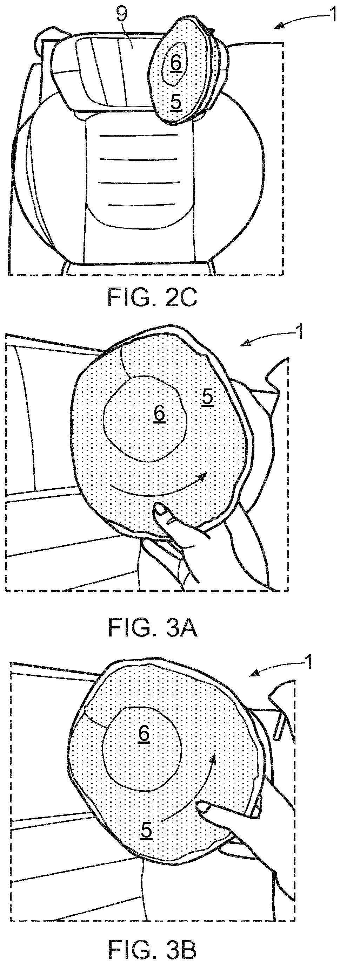

As can be seen in figures 2B and 2C, the sleeping aid 1 according to the present invention can be used on both sides of the headrest 9.

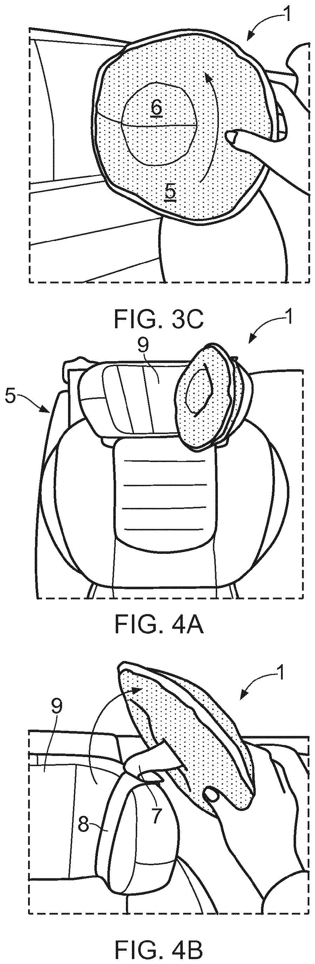

Figures 3A-3C show how the sleeping aid 1 according to the present invention can be adjusted for optimal comfort of the child/occupant. The pivot connection between the back layer 3 and the strap 7, through the pivot point P, will allow the pad or pillow 1 to be rotated and adjusted to the child which is to use the sleeping aid 1 for optimal comfort.

The placement of the second portion 6 of the sleeping aid 1 offset of center C will result in that the first portion 5 will have a "ring" of varying width around circumference of the ring, where the part of the ring with the greatest width is intended to be placed between the shoulder and the jaw of the child when the sleeping aid 1 is used.

Figures 4A-4C show how the sleeping aid 1 according to the present invention can be moved from a position in use, where the sleeping aid 1 is located inside the headrest 9 and to a position where the sleeping aid 1 is not in use, where the sleeping aid 1 then is located on a rear backside of the headrest 9. The strap 7, having a certain length will then allow the sleeping aid 1 to be flipped between said positions.

Figure 5 shows a child seated in the infant seat S, where the child uses the sleeping aid 1 according to the present invention. The sleeping aid 1 is arranged between the head of the child and the head rest 9 arranged in the infant seat S, where most of the head of the child is placed and received within the second portion 6 of the sleeping aid 1.

The invention has now been explained with the aid of several non-limiting exemplary embodiments. A person of skill in the art will understand that that a number of variations and modifications can be made to the sleeping aid as described within the scope of the invention as described in the appended claims.

## Claims

1. A sleeping aid (1) for an infant seat (S), the sleeping aid (1) comprises a pad being divided into a thicker first portion (5) and a thinner second portion (6), the thinner second portion (6) being completely encircled or enclosed by the thicker first portion (5), the thinner second portion (6) forming a support section, the thinner second portion (6) further being arranged offset center of the sleeping aid (1), and a strap and/or elastic band (7, 8) being pivotally attached to the pad through a pivot connection point (P).

2. A sleeping aid (1) according to claim 1, **characterized in that** the pad comprises a front layer (2) and a back layer (3), between which two said layers a layer (4) of soft foam material is arranged.

3. Sleeping aid according to claim 1, **characterized in that** the sleeping aid (1) has a crescent shape.

4. Sleeping aid according to claim 1, **characterized in that** the front layer (2) and/or back layer (3) are manufactured from a skin friendly material.

5. Sleeping aid according to claim 1, **characterized in that** the strap (7) or the elastic band (8) is pivotally connected (P) to the back layer (3).

6. Sleeping aid according to any one of the claims 1, **characterized in that** the elastic band (8) is provided with a loop and hook/Velcro arrangement.

7. Sleeping aid (1) according to claim 1, **characterized in that** the first and second portions have different thickness, when viewed in cross section along a line A-A..

8. Sleeping aid according to any one of the claims 1 or 7, **characterized in that** the second portion (6) forms a depression or a "bowl" in the sleeping aid (1).

9. Sleeping aid according to any one of the claims 1 to 8, **characterized in that** the front layer (2), back layer (3) and the layer (4) of soft foam material are connected to each outer around their outer peripheries and on an inside of their outer peripheries to form the first and second portions (5, 6) in the sleeping aid (1).

## Patentansprüche

1. Schlafhilfe (1) für einen Kindersitz (S), wobei die Schlafhilfe (1) ein in einen dickeren ersten Teil (5) und einen dünneren zweiten Teil (6) unterteiltes Kissen umfasst, wobei der dünnere zweite Teil (6) vollständig vom dickeren ersten Teil (5) umgeben oder umschlossen ist, wobei der dünnere zweite Teil (6) einen Stützabschnitt bildet, wobei der dünnere zweite Teil (6) ferner versetzt zur Mitte der Schlafhilfe (1) angeordnet ist und wobei ein Gurt und/oder ein elastisches Band (7, 8) drehbar am Kissen durch einen Drehverbindungspunkt (P) angeordnet ist.

2. Schlafhilfe (1) nach Anspruch 1, **dadurch gekennzeichnet, dass** das Kissen eine vordere Schicht (2) und eine hintere Schicht (3) umfasst, wobei zwischen den zwei Schichten eine Schicht (4) aus weichem Schaumstoff angeordnet ist.

3. Schlafhilfe nach Anspruch 1, **dadurch gekennzeichnet, dass** die Schlafhilfe (1) eine Halbmondform aufweist.

4. Schlafhilfe nach Anspruch 1, **dadurch gekennzeichnet, dass** die vordere Schicht (2) und/oder die hintere Schicht (3) aus einem hautfreundlichen Material hergestellt sind.

5. Schlafhilfe nach Anspruch 1, **dadurch gekennzeichnet, dass** der Gurt (7) oder das elastische Band (8) drehbar mit der hinteren Schicht (3) verbunden (P) ist.

6. Schlafhilfe nach Anspruch 1, **dadurch gekennzeichnet, dass** das elastische Band (8) mit einer Klettverschlussanordnung ausgestattet ist.

7. Schlafhilfe (1) nach Anspruch 1, **dadurch gekennzeichnet, dass** der erste und zweite Teil eine unterschiedliche Stärke betrachtet im Querschnitt entlang einer Linie A-A aufweisen.

8. Schlafhilfe nach Anspruch 1 oder 7, **dadurch gekennzeichnet, dass** der zweite Teil (6) eine Vertiefung oder eine "Schale" in der Schlafhilfe (1) bildet.

9. Schlafhilfe nach einem der Ansprüche 1 bis 8, **dadurch gekennzeichnet, dass** die vordere Schicht (2), die hintere Schicht (3) und die Schicht (4) aus weichem Schaumstoff miteinander um ihre Außenumfänge und auf einer Innenseite ihrer Außenumfänge verbunden sind, um den ersten und zweiten Teil (5, 6) in der Schlafhilfe (1) zu bilden.

## Revendications

1. Aide à l'endormissement (1) pour un siège bébé (S), l'aide à l'endormissement (1) comprend un coussinet qui est divisé en une première partie plus épaisse (5) et en une seconde partie plus fine (6), la seconde partie plus fine (6) étant complètement encerclée ou enfermée par la première partie plus épaisse (5), la second partie plus fine (6) formant une section de support, la seconde partie plus fine (6) étant en outre agencée de manière excentrée par rapport à l'aide à l'endormissement (1), et une sangle et/ou une bande élastique (7, 8) étant fixée de manière pivotante sur le coussinet par un point de raccordement de pivot (P).

2. Aide à l'endormissement (1) selon la revendication 1, **caractérisée en ce que** le coussinet comprend une couche avant (2) et une couche arrière (3), entre lesquelles deux dites couches, on agence une couche (4) de matériau en mousse souple.

3. Aide à l'endormissement selon la revendication 1, **caractérisée en ce que** l'aide à l'endormissement (1) a une forme de croissant.

4. Aide à l'endormissement selon la revendication 1, **caractérisée en ce que** la couche avant (2) et/ou la couche arrière (3) sont fabriquées à partir d'un matériau doux pour la peau.

5. Aide à l'endormissement selon la revendication 1, **caractérisée en ce que** la sangle (7) ou la bande élastique (8) est raccordée de manière pivotante (P) à la couche arrière (3).

6. Aide à l'endormissement selon la revendication 1, **caractérisée en ce que** la bande élastique (8) est fournie avec un agencement de boucles et de crochets / Velcro.

7. Aide à l'endormissement (1) selon la revendication 1, **caractérisée en ce que** les première et seconde parties ont une épaisseur différente, lorsqu'elles sont observées en coupe transversale sur une ligne A-A.

8. Aide à l'endormissement selon l'une quelconque des revendications 1 ou 7, **caractérisée en ce que** la seconde partie (6) forme un creux ou un « bol » dans l'aide à l'endormissement (1).

9. Aide à l'endormissement selon l'une quelconque des revendications 1 à 8, **caractérisée en ce que** la couche avant (2), la couche arrière (3) et la couche (4) de matériau en mousse souple sont raccordées à chaque extérieur autour de leurs périphéries externes et sur un intérieur de leurs périphéries externes pour former les première et seconde parties (5, 6) dans l'aide à l'endormissement (1).
